# EUROPÄISCHE PATENTSCHRIFT

(11) **EP 2 721 931 B1**
(45) Veröffentlichungstag und Bekanntmachung des Hinweises auf die Patenterteilung: **30.08.2017**
(21) Anmeldenummer: 13156317.3
(22) Anmeldetag: 22.02.2013
(51) Int. Cl.: A23F 5/38, A23F 5/40, A23F 5/32, A23F 5/34, A23G 1/56

(54) **Vorrichtung zur Zubereitung eines kakao- und/oder kaffeehaltigen Getränkes**
Device for preparing a beverage containing cocoa and/or coffee
Dispositif de préparation d'une boisson contenant du café et/ou du cacao

(30) Priorität: 19.10.2012 DE 202012104037 U
(43) Veröffentlichungstag der Anmeldung: 23.04.2014
(73) Patentinhaber: New General Food Deutschland GmbH, 41564 Kaarst (DE)
(72) Erfinder: Wingens, Eric, 47804 Krefeld (DE)
(74) Vertreter: Rausch.Wanischeck.Brinkmann.Intellectual Property

(56) Entgegenhaltungen:
- WO-A1-2006/115396
- DE-A1- 3 821 379
- DE-A1- 19 614 669
- DE-A1- 19 919 204
- DE-A1- 19 962 463
- DE-A1-102005 017 613
- DE-U1- 29 811 729
- DE-U1- 29 904 736
- DE-U1-202006 000 235

## Beschreibung

Die Erfindung betrifft eine Vorrichtung zur Zubereitung eines kakao- und/oder kaffeehaltigen Getränks mittels Einbringens der Vorrichtung in heiße Flüssigkeit, wobei die Vorrichtung zumindest getrockneten Kakao- und/oder Kaffeeextrakt aufweist.

Die Erfindung betrifft somit insbesondere den Bereich der sogenannten "löslichen Kaffees/löslichen Kakaos" oder "Instantkaffeesllnstantkakaos". Diese im Weiteren Instantkaffees genannten Kaffees bzw. Instantkakaos genannten Kakaos enthalten getrockneten Kaffeeextrakt und/oder Kakaoextrakt, welcher durch Aufgießen mit heißem Wasser ein Kaffeegetränk oder kaffeehaltiges Getränk bzw. Kakaogetränk oder kakaohaltiges Getränk erzeugt. Neben der besonders einfachen und zeitsparenden Herstellung eines kakao- und/oder kaffeehaltigen Getränks, insbesondere eines Kakaos oder Kaffees mittels des löslichen Kakao- und/oder Kaffeeextraktes ergibt sich ebenfalls eine längere Haltbarkeit des Produktes gegenüber dem herkömmlichen Kakao-/Kaffeepulver.

Sofern im Folgenden von "Kaffee" die Rede ist, soll stets auch gleichzeitig die Verwendung von "Kakao" mit einbezogen sein.

Zur Herstellung des getrockneten Kaffeeextraktes werden die Kaffeebohnen gereinigt, von Fremdkörpern befreit und anschließend geröstet und gemahlen. Je nach gewünschtem Geschmack und Aroma einer Kaffeemischung werden Kaffees unterschiedlicher Sorte, Herkunft und Qualität aufeinander abgestimmt. Abhängig von der Rezeptur erfolgt die Mischung entweder vor der Röstung oder nachdem jede Sorte separat geröstet worden ist. Aus dem gemahlenen Kaffee, dessen Mahlgrad mit ca. 2 mm größer ist als der für handelsübliche Kaffeeautomaten, werden in einer Extraktionsanlage die löslichen Bestandteile des Kaffees extrahiert. Eine solche Extraktionsanlage arbeitet mit Wassertemperaturen von bis zu 200° C, wobei ein Druck von bis zu 20 bar benötigt wird, damit das Wasser nicht verdampft. Der gemahlene Kaffee befindet sich in sogenannten Perkolatoren, durch die heißes Wasser fließt und dabei die löslichen Bestandteile des Kaffees herauslöst. Der so gewonnene Kaffeeextrakt wird in einer Eindampfanlage konzentriert und danach getrocknet. Die Trocknung kann entweder mittels der sogenannten Sprühtrocknung oder mittels der sogenannten Gefriertrocknung erfolgen.

Sofern in Bezug auf "Kakao" auch andere Verfahren zur Herstellung des Kakaoextraktes in Frage kommen, sollen diese unmittelbar mit in die Erfindung einbezogen sein.

Bei der Sprühtrocknung wird der Kaffeeextrakt mit hohem Druck in Zerstäuberdüsen des oberen Teils eines sogenannten Sprühturms gepumpt. Von unten strömt heiße, trockene Luft in den Sprühturm ein. Das Wasser des Extraktes verdampft, während der Extrakt durch den Sprühtrockner fällt, so dass sich im unteren Teil des Sprühturms die sprühgetrocknete Instantware sammelt. Bei der Sprühtrocknung wird ein feinpulvriger, löslicher Kaffee erhalten, welcher vorzugsweise in löslichem Cappuccino Verwendung findet.

Bei der alternativen Gefriertrocknung wird der Kaffeeextrakt zunächst mit Luft oder CO₂ beaufschlagt und auf ca. - 5° C abgekühlt. Das entstehende, mit Softeis vergleichbare, Produkt wird dann auf einem Gefrierband bis auf ca. - 50° C tiefgefroren, danach in einem Kaltraum vermahlen und abgesiebt. In einem Vakuumtrockner wird das in dem gemahlenen Produkt enthaltene Wasser sublimiert. Der übrigbleibende, feste Bestandteil des Produktes ist somit der Instantkaffee.

Ausgehend vom gleichen Kakao- bzw. Kaffeeextrakt erhält man durch die technisch deutlich aufwändigere Gefriertrocknung einen höherwertigen und wohlschmeckenderen Löskaffee als durch Sprühtrocknung. Dies ist darauf zurückzuführen, dass die thermische Belastung des Extraktes bei der Gefriertrocknung deutlich geringer ist als bei der Sprühtrocknung.

Für die Zubereitung eines kakao- und/oder kaffeehaltigen Getränks, insbesondere eines Kakaos oder Kaffees, wird der durch den Trocknungsvorgang erhaltene Instantkakao und/oder -kaffee in heiße Flüssigkeit, insbesondere heißes Wasser, eingebracht und verrührt. Der lösliche Instantkakao und/oder -kaffee löst sich dabei vollständig in der Flüssigkeit, so dass ein homogenes Getränk ohne spürbare Feststoffe entsteht.

Nachteilig bei den vorgenannten Instantkaffees/-kakaos ist, dass der Anwender zum einen selbst eine für das gewünschte Getränk notwendige Instantpulvermenge abschätzen muss. Diese hat er zumeist der auf der Verpackung vorhandenen Beschreibung zu entnehmen. Sofern der Anwender also nicht besonders geübt ist in der Zubereitung von kakao- und/oder kaffeehaltigen Getränken aus Instantpulvern, entsteht für ihn ein höherer zeitlicher Aufwand. Zum anderen lässt sich auch aus den auf der Verpackung angegebenen, empfohlenen Mengen nicht ableiten, ob mit der entsprechenden Menge ein besonders starker oder weniger starker Kaffee/Kakao zubereitet wird. Zudem ist es bei der Verwendung eines Pulvers stets nachteilig, dass Teile der Pulvermenge von der Portionierungsvorrichtung, beispielsweise einem Löffel, herabfallen können, so dass dem Verwender Unannehmlichkeiten entstehen.

Zur Verhinderung der vorgenannten Nachteile existieren im Stand der Technik bereits die sogenannten Kaffeepads/Kakaopads. Diese enthalten jedoch keinen getrockneten Kakao- und/oder Kaffeeextrakt im Sinne eines Instantkaffeesl-kakaos, sondern statt dessen gemahlene Bohnen. Die Pads beinhalten eine vorgegebene Menge Kaffeepulver bzw. Kakaopulver und sind in unterschiedliche Stärkekategorien, beispielsweise "milder Kaffee" oder besonders "starker Kaffee", eingeteilt. Zudem ist die in dem Pad enthaltene Menge auf eine gewöhnliche Tassengröße von beispielsweise 200 ml Inhalt abgestimmt. Zur Zubereitung eines Getränks mittels dieser Pads müssen diese in ein dazu passendes Gerät eingelegt werden. In dem Gerät wird erhitztes Wasser durch das Pad gedrückt, so dass die löslichen Bestandteile des Kaffees/Kakaos herausgelöst werden und in die Getränkezubereitung gelangen.

Nachteilig bei der vorgenannten Zubereitung mittels sogenannter Pads ist, dass diese eben nicht einfach und unabhängig von technischen Mitteln zu einem kaffeehaltigen/kakaohaltigen Getränk führt. Vielmehr hat der Verwender für die jeweiligen Pads eine passende Padmaschine bereitzuhalten.

Zudem ist es nicht möglich, die Padmaschinen mit mehr als einem Pad zu bestücken, um einen stärkeren Kaffee/Kakao zuzubereiten.

Zur Überwindung dieses Nachteils sind aus dem Stand der Technik gepresste Formkörper bekannt geworden, die die für die Zubereitung gewünschten Inhaltsstoffe aufweisen und in einer Flüssigkeit zum Verzehr aufgelöst werden können.

So offenbart die DE 19919204 A1 in diesem Zusammenhang einen Pressling, welcher fein zerkleinerte Aromaträger und mindestens einen fein zerkleinerten, im Wesentlichen gleichmäßig im Pressling verteilten Zusatz enthält. Folglich sind die Inhaltsstoffe innerhalb des Presslings homogen verteilt und durch ihre fein zerkleinerte Erscheinungsform nicht sichtbar nebeneinander angeordnet.

Die DE 10 2005 017 613 A1 offenbart ein Instantprodukt, bei welchem die Inhaltsstoffe gleichmäßig verteilt sind. Es ist offenbart, dass das Kaffee-Extrakt beziehungsweise das Kakao-Pulver eingemischt wird, bis alle Komponenten gleichmäßig verteilt sind.

Die DE 29811729 U1 betrifft Kaffeepulverpresslinge, welche ein homogenes Pulvergemisch aufweisen. Darüber hinaus kann der Pulverpressling einen Überzug aus beispielsweise Kaffeeweißer oder Hartgelatine aufweisen.

Ferner offenbart die DE 19962463 A1 ein Instantprodukt bestehend aus leicht löslichen Lebensmittelprodukten in Pulverform, wie insbesondere Kaffee oder Kakao sowie homogene Gemische daraus.

Vorgenannte Ausgestaltungen haben den Nachteil, dass die einzelnen Inhaltsstoffe weder für den Verwender während der Anwendung noch für den Hersteller während des Produktionsproszesses erkennbar sind. Die Identifikation des Produktes unabhängig von seiner Verpackung ist damit nicht möglich.

Es ist daher Aufgabe der vorliegenden Erfindung, eine Vorrichtung zur Zubereitung eines kakao- und/oder kaffeehaltigen Getränks zu schaffen, welche unabhängig von Kaffeemaschinen ist und die unabhängig von ihrer Verpackung identifizierbar ist.

Zur Lösung der vorgenannten Aufgabe wird eine Vorrichtung zur Zubereitung eines kakao- und/oder kaffeehaltigen Getränks mittels Einbringens der Vorrichtung in heiße Flüssigkeit gemäß Anspruch 1 vorgeschlagen.

Durch die erfindungsgemäße Ausbildung der Vorrichtung als einstückige und stabile Einheit ergibt sich eine aus Instantkaffee und/oder Instantkakao bestehende Vorrichtung, welche in ihrer Art den bekannten Spülmaschinentabs gleicht. Somit hat der Verwender bei der Zubereitung eines kakao- und/oder kaffeehaitigen Getränks nicht auf die für eine gewünschte Getränkemenge notwendige Portion zu achten, insbesondere muss er die Menge des benötigten Instantpulvers nicht selbst abmessen. Die einstückige und insbesondere auch stabile Einheit ermöglicht eine unkomplizierte und gleichfalls auch verlustfreie Portionierung des Instantkaffees und/oder -kakaos. Ein Verschütten von Instantkaffees und/oder -kakao während des Portionierungsvorgangs entfällt dabei vorteilhaft. Zudem kann der Anwender mittels der erfindungsgemäßen Vorrichtung auch die Konzentration seines gewünschten Getränks selbst bestimmen. Sofern er eher einen stärkeren Kaffee/Kakao bevorzugt, kann er entweder die verwendete Flüssigkeitsmenge reduzieren oder aber anstatt einer Vorrichtung gleich zwei Vorrichtungen verwenden. Der Begriff "stabil" beinhaltet die Eigenschaft der Einheit, ihre Form und die Agglomeration des Kaffeeextraktes/Kakaoextraktes beizubehalten bis diese in die Flüssigkeit gegeben wird.

Durch die Erfindung entstehen für den Verwender somit insbesondere folgende Vorteile:
- Unabhängigkeit von Kaffeemaschinen,
- Portionieren ohne Verschütten von Instantpulver,
- Entfall des Abmessens einer benötigen Instantpulvermenge,
- leichtes Variieren der Konzentration des kakao- und/oder kaffeehaltigen Getränks,
- einfache Lagerung der Vorrichtung (z. B. wie Würfelzucker),
- einfache Verpackung der einzelnen Einheiten.

Im Sinne der Erfindung ist der Hauptinhaltsstoff der Vorrichtung Kakao- und/oder Kaffeeextrakt. Dabei beträgt der Gewichtsanteil des Kakao- und/oder Kaffeeextraktes 80 %, vorzugsweise 85 % und insbesondere gleich 90 %. Dadurch wird gewährleistet, dass das kakao- und/oder kaffeehaltige Getränk nach wie vor als Hauptinhaltsstoff Kakao- und/oder Kaffeeextrakt beinhaltet, so dass zum einen ein charakteristischer Kakao- und/oder Kaffeegeschmack beibehalten bleibt und zum anderen die Größeneinheit der Vorrichtung für eine Tasse Kaffee/Kakao bestimmter Stärke nicht zu groß wird.

Die Erfindung sieht weiterhin vor, dass die Vorrichtung mindestens einen weiteren Inhaltsstoff aufweist. Dieser mindestens eine weitere Inhaltsstoff kann vorteilhaft Milchpulver sein. Da viele Kaffeetrinker ohnehin ihren Kaffee oder ihr kaffeehaltiges Getränk mit Milch genießen, entfällt der sonst notwendige weitere Zubereitungsschritt der Zugabe von Milch. Insbesondere liegt das Milchpulver in einer zu dem Kaffeeextrakt ausreichenden Menge vor, so dass sich ein besonders wohlschmeckendes Getränk ergibt. Somit lässt sich ein kaffeehaltiges Getränk mit Milch auch überall dort besonders einfach zubereiten, wo frische Milch oder auch Milchpulver separat nicht verfügbar sind.

Besonders vorteilhaft sieht die Erfindung dabei vor, dass der Gewichtsanteil von Kakao- und/oder Kaffeeextrakt ungefähr 90 % und der Gewichtsanteil von Milchpulver ungefähr 10 % beträgt. Dieses Mischungsverhältnis entspricht ungefähr demjenigen, welches Kaffeetrinker gewöhnlich bevorzugen. Somit kann mittels eines einzigen Zubereitungsschrittes, nämlich der Zugabe der Vorrichtung in heiße Flüssigkeit, ein verzehrfertiger Kaffee mit Milch zubereitet werden.

Vorteilhaft weist die Vorrichtung als weiteren Inhaltsstoff einen Aromastoff auf. Dabei bieten sich als Aromastoffe insbesondere Vanille, Karamell, Haselnuss, Kokosnuss, Zitrone oder Erdbeere an. Der Aromastoff kann dabei als natürliches oder auch künstliches Aroma vorliegen. Somit ist insbesondere ein kakao- und/oder kaffeehaltiges Getränk zubereitbar, welches Kakao- und/oder Kaffeeextrakt, Milchpulver und einen oder auch mehrere Aromastoffe enthält. Insgesamt lassen sich somit kakao- und/oder kaffeehaltige Getränke mit beispielsweise vier oder fünf Inhaltsstoffen zubereiten. Ein Getränk mit vier Inhaltsstoffen kann dabei beispielsweise Kakao- und/oder Kaffeeextrakt, Milch, Zucker und Vanille enthalten. Ein Getränk mit fünf Inhaltsstoffen kann zusätzlich zu dem vorgenannten Getränk zusätzlich einen weiteren Aromastoff enthalten, beispielsweise Haselnuss, so dass sich der Geschmack von Kaffee/Kakao, Milch, Zucker, Vanille und Haselnuss ergibt.

Die Erfindung sieht weiterhin vor, dass die Vorrichtung eine runde oder eckige Form aufweist. Besonders vorteilhaft kann die Vorrichtung jedoch auch die Form eines Bonbons oder einer Praline aufweisen. Somit lassen sich unterschiedliche Geschmacksrichtungen durch unterschiedliche Formen kennzeichnen. Der Verwender wird somit besonders einfach auf die Inhaltsstoffe, insbesondere die Aromastoffe, hingewiesen. Beispielsweise kann die Vorrichtung die Form eines darin enthaltenen Aromastoffes aufweisen, beispielsweise die Form einer Zitrone, einer Vanilleschote, einer Hasel- oder Kokosnuss etc.

Schließlich ist erfindungsgemäß vorgesehen, dass die Inhaltsstoffe der Vorrichtung in der Einheit streifenförmig sichtbar nebeneinander angeordnet sind. Dadurch kann der Verwender sofort erkennen, dass es sich bei der Vorrichtung um eine solche handelt, welche neben Kakao- und/oder Kaffeeextrakt einen weiteren Inhaltsstoff aufweist. Beispielsweise kann die Vorrichtung eine kaffeebraune Einheit mit weißen Streifen sein, was darauf hinweist, dass die Einheit zusätzlich Milchpulver beinhaltet. Ebensolche farbigen Streifen können auch auf die Inhaltsstoffe Zitrone, Erdbeere, Haselnuss und so weiter hinweisen.

Im folgenden wird eine Ausführungsform der Erfindung anhand einer kaffeehaltigen Vorrichtung näher erläutert. Ebenso ist die Erfindung jedoch auch entsprechend mit einer kakaohaltigen Vorrichtung ausführbar. Es zeigen:
- Fig. 1a), 1b):: Vorrichtung mit einer Beschriftung "Milk" bzw. "Cappuccino";
- Fig. 2:: Vorrichtung in der Form eines Bonbons;
- Fig. 3:: Vorrichtung mit sichtbar nebeneinander angeordneten Inhaltsstoffen.

Die erfindungsgemäße Vorrichtung in der Form eines sogenannten "Tabs" zur Zubereitung eines kaffeehaltigen Getränks lässt sich insbesondere durch ein Herstellungsverfahren erzielen, welches die Verfahrensschritte
- Reinigen der Kaffeebohnen,
- Rösten,
- Mahlen,
- evtl. Mischen verschiedener Kaffeesorten zu einem Kaffeegemisch,
- Extrahieren der löslichen Bestandteile des Kaffees, insbesondere durch Konzentrieren und Trocknen,
- Sprühtrocknen oder Gefriertrocknen
aufweist. Während des Vorgangs der Sprühtrocknung bzw. Gefriertrocknung werden die Vorrichtungen geformt, indem entweder bei der Sprühtrocknung der feinpulvrige, lösliche Instantkaffee zu Einheiten verpresst wird oder bei der Gefriertrocknung das tiefgefrorene Produkt in eine gewünschte Form portioniert wird. Letzteres kann beispielsweise durch einen Schneid- oder auch Stanzvorgang erfolgen. Dadurch entstehen die einstückigen und stabilen Einheiten, welche für eine gewöhnliche Portion und Konzentration des gewünschten kaffeehaltigen Getränks ausgelegt sind.

Vor dem Verfahrensschritt der Sprühtrocknung oder Gefriertrocknung kann dem Kaffeeextrakt ein weiterer Inhaltsstoff zugefügt werden, welcher insbesondere Milchpulver oder auch ein Aromastoff, wie beispielsweise Vanille, Karamell, Haselnuss, Kokosnuss, Zitrone oder Erdbeere, ist. Die Vermischung empfiehlt sich insbesondere nach dem Verfahrensschritt des Extrahierens der löslichen Bestandteile des Kaffees.

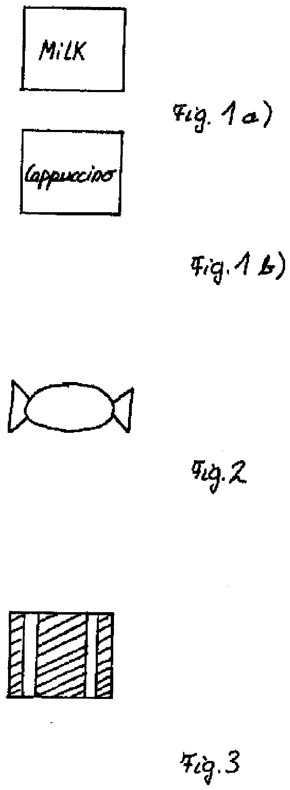

Die Einheiten können in runder oder eckiger (Fign. 1a), 1b)) Form hergestellt werden, was sich insbesondere herstellungstechnisch als besonders einfach erweist. Es ist durch die einstückige und stabile Ausbildung der Vorrichtungen nunmehr auch möglich, diese mit einer Aufschrift - beispielsweise der Geschmacksrichtung - zu versehen. Zudem können auch Formen wie beispielsweise Bonbonformen (Fig. 2) oder Pralinenformen ausgebildet werden, welche unmittelbar auf die Inhaltsstoffe der Vorrichtung hinweisen. Beispielsweise kann eine Einheit, welche den Aromastoff Zitrone beinhaltet, in Form einer Zitrone hergestellt werden. Weiterhin sind die Inhaltsstoffe der Einheit sichtbar in der Einheit angeordnet, so dass der Verwender unmittelbar die Inhaltsstoffe erkennt (Fig. 3). Dabei kann beispielsweise der Inhaltsstoff "Milchpulver" als weiße Streifen in der ansonsten kaffeebraunen Einheit angeordnet sein.

Die zuvor erläuterte Ausführungsform ist entsprechend abgewandelt auch auf kakaohaltige Vorrichtungen oder kakao- und/oder kaffeehaltige Vorrichtungen übertragbar.

Die so hergestellte Vorrichtung, das heißt die Portionseinheit, wird zur Zubereitung des kakao- und/oder kaffeehaltigen Getränks in eine heiße Flüssigkeit eingebracht, welche besonders vorteilhaft Wasser oder aber auch Milch sein kann. Da es sich bei dem Kakao- und/oder Kaffeeextrakt um lösliches Kakao- und/oder Kaffeepulver handelt, lässt sich durch leichtes Rühren der Flüssigkeit besonders schnell und einfach das gewünschte Getränk herstellen. Falls die Einheit bereits zusätzliche Inhaltsstoffe wie beispielsweise Milchpulver oder auch Aromen enthält, entfällt die separate Zugabe dieser Inhaltsstoffe.

Der Verwender ist somit bei der Herstellung seines gewünschten Getränks unabhängig von Kaffeemaschinen oder auch der Vorratshaltung von frischer Milch, Milchpulver oder Aromastoffen.

## Patentansprüche

1. Vorrichtung zur Zubereitung eines kakao- und/oder kaffeehaltigen Getränks mittels Einbringens der Vorrichtung in heiße Flüssigkeit als einstückige und stabile Einheit für eine bestimmte Portion und Konzentration des kakao- und/oder kaffeehaltigen Getränks, bestehend aus gefrier- oder sprühgetrocknetem Kakao- und/oder Kaffeeextrakt und mindestens einem weiteren Inhaltsstoff, **dadurch gekennzeichnet, dass** die Inhaltsstoffe in der Einheit streifenförmig sichtbar nebeneinander angeordnet sind.

2. Vorrichtung nach Anspruch 1, **dadurch gekennzeichnet, dass** der Hauptinhaltsstoff Kakao- und/oder Kaffeeextrakt ist.

3. Vorrichtung nach Anspruch 1 oder 2, **dadurch gekennzeichnet, dass** der Gewichtsanteil des Kakao- und/oder Kaffeeextraktes größer 80 % ist, vorzugsweise 85 % und insbesondere gleich 90 % ist.

4. Vorrichtung nach Anspruch 1, **dadurch gekennzeichnet, dass** der mindestens eine weitere Inhaltsstoff Milchpulver ist.

5. Vorrichtung nach Anspruch 4, **dadurch gekennzeichnet, dass** der Gewichtsanteil von Kakao- und/oder Kaffeeextrakt ungefähr 90 % und der Gewichtsanteil von Milchpulver ungefähr 10 % beträgt.

6. Vorrichtung nach einem der Ansprüche 4 oder 5, **dadurch gekennzeichnet, dass** der mindestens eine weitere Inhaltsstoff ein Aromastoff insbesondere Vanille, Karamell, Haselnuss, Kokosnuss, Zitrone oder Erdbeere ist.

7. Vorrichtung nach einem der vorhergehenden Ansprüche, **gekennzeichnet durch** eine runde, eckige oder bonbon- oder pralinenartige Form.

## Claims

1. A device for the preparation of a beverage containing cocoa and/or coffee by means of introducing the device into a hot liquid as one-piece and stable unit for a particular portion and concentration of the beverage containing cocoa and/or coffee, consisting of freeze-dried or spray-dried cocoa and/or coffee extract and at least one other ingredient, **characterized in that** the ingredients are visibly arranged in the unit next to each other in the form of strips.

2. A device according to claim 1, **characterized in that** the main ingredient is cocoa and/or coffee extract.

3. A device according to claim 1 or 2, **characterized in that** the weight proportion of the cocoa and/or coffee extract is higher than 80%, preferably 85% and in particular equal to 90%.

4. A device according to claim 1, **characterized in that** the at least one other ingredient is milk powder.

5. A device according to claim 4, **characterized in that** the weight proportion of the cocoa and/or coffee extract is about 90% and the weight proportion of the milk powder is about 10%.

6. A device according to one of the claims 4 or 5, **characterized in that** the at least one other ingredient is a flavouring agent, in particular vanilla, caramel, hazelnut, coco nut, lemon or strawberry.

7. A device according to one of the preceding claims, **characterized by** a round, square or candy or chocolate like shape.

## Revendications

1. Dispositif de préparation d'une boisson contenant du cacao et/ou du café en introduisant le dispositif dans un liquide chaud comme une unité stable et d'un seul tenant pour une portion et concentration particulières de la boisson contentant du cacao et/ou du café, consistant en un extrait de cacao et/ou de café lyophilisé ou séché par pulvérisation et en au moins un autre ingrédient, **caractérisé en ce que** les ingrédients sont disposés visiblement côte à côte sous forme de bandes dans l'unité.

2. Dispositif selon la revendication 1, **caractérisé en ce que** l'ingrédient principal est de l'extrait de cacao et/ou de café.

3. Dispositif selon la revendication 1 ou la revendication 2, **caractérisé en ce que** la proportion en poids de l'extrait de cacao et/ou de café est plus grande que 80%, de préférence que 85% et est notamment égale à 90%.

4. Dispositif selon la revendication 1, **caractérisé en ce que** l'au moins un autre ingrédient est du poudre de lait.

5. Dispositif selon la revendication 4, **caractérisé en ce que** la proportion en poids de l'extrait de cacao et/ou de café est environ 90% et la proportion en poids du poudre de lait est environ 10%.

6. Dispositif selon l'une des revendications 4 ou 5, **caractérisé en ce que** l'au moins un autre ingrédient est un agent aromatisant, notamment de la vanille, du caramel, de la noisette, de la noix de coco, du citron ou de la fraise.

7. Dispositif selon l'une des revendications précédentes, **caractérisé par** une forme ronde, angulaire ou à la manière d'un bonbon ou d'un chocolat.
